# EUROPEAN PATENT SPECIFICATION

(11) **EP 2 175 593 B1**
(45) Date of publication and mention of the grant of the patent: **16.02.2011**
(21) Application number: 08305657.2
(22) Date of filing: 09.10.2008
(51) Int. Cl.: H04L 12/56

(54) **Method for routing data packets in a LAN**
Verfahren zum Routen von Datenpaketen in einem LAN
Procédé de routage de paquets de données sur un réseau LAN

(43) Date of publication of application: 14.04.2010
(73) Proprietor: Alcatel Lucent, 75008 Paris (FR)
(72) Inventor: Puricelli, Paolo Maria, 20040, CAPONAGO (IT); Ciammarughi, Laura, 20040, CAPONAGO (IT)
(74) Representative: Schmidt, Werner Karl

(56) References cited:
- EP-A- 1 392 026
- PRZYGIENDA Z2 SAGL N SHEN CISCO SYSTEMS N SHETH JUNIPER NETWORKS T: "M-ISIS: Multi Topology (MT) Routing in Intermediate System to Intermediate Systems (IS-ISs); rfc5120.txt" IETF STANDARD, INTERNET ENGINEERING TASK FORCE, IETF, CH, 1 February 2008 (2008-02-01), XP015055189 ISSN: 0000-0003
- CHRISTIAN P ET AL: "IS-IS Automatic Encapsulation; draft-ietf-isis-auto-encap-00.txt" IETF STANDARD-WORKING-DRAFT, INTERNET ENGINEERING TASK FORCE, IETF, CH, vol. isis, 1 July 2002 (2002-07-01), XP015021579 ISSN: 0000-0004

## Description

### Technical Field

The present invention relates to the field of communication networks. In particular, the present invention relates to a method for routing data packets in a packet-switched Local Area Network, LAN. The present invention further relates to a packet-switched LAN implementing the above method.

### Background Art

As it is known, in a packet-switched network the traffic is forwarded in the form of data packets, which are transmitted from a source network element to a destination network element by passing through intermediate network elements.

Typically, a packet comprises a payload and a header. The header includes control information, such as the source address and the destination address of the packet, content integrity information, priority information, information about the type of payload, and the like.

Conventionally, from a logical point of view, the communication networks are configured in compliance with the known OSI model, according to which the various functions of the network are grouped in seven different logical layers: application layer, presentation layer, session layer, transport layer, network layer, data-link layer, and physical layer.

In particular, with reference to the network layer, the network elements of a communication network can all operate according to the same network layer protocol or according to different network layer protocols. Examples of network layer protocols are the CLNP (Connection Less Network Protocol) and the IP (Internet Protocol).

Packet routing is performed by using suitable routing protocols.

For example, when all network elements of a communication network operate according to the CLNP protocol, the typically used routing protocol is the IS-IS (Intermediate System to Intermediate System) routing protocol.

The IS-IS routing protocol provides that each network element compiles a respective adjacency list, i.e. a list of the network elements which are adjacent thereto. Subsequently, each network element transmits its adjacency list to all the other network elements by means of messages called LSP (Link State Packets). In this way, each network element knows the adjacency list of all the other network elements of the communication network.

Then, each network element applies a SPF (Shortest Path First) algorithm to its adjacency list and to the adjacency lists of the other network elements. The SPF algorithm determines, based on the topological information of the communication network, the shortest path, i.e. the path having the minimum cost, between the network element and any other network element of the network. In particular the SPF algorithm store in routing/forwarding tables which is the next hop (i.e. the adjacent network element) where the packets directed to each other network element of the network have to be forwarded.

When packets have to be transmitted from a source network element to a destination network element the packet is forwarded to the next hop according to the contents of the forwarding table.

As it is known, a LAN is a communication network comprising a plurality of network elements connected to one data bus, which is shared by the network elements with the aim of transporting traffic, e.g. packet-shaped traffic.

When the routing is performed by means of the IS-IS routing protocol, to effectively use the resources of the LAN, it is known to virtually modify the structure of the LAN thereby obtaining a star-topology network having as center of the star a virtual network element, called "pseudo-node". The role of pseudo-node is normally performed by a network element of the LAN, called Designated IS. Therefore, owing to this configuration, each network element of the LAN has the pseudo-node as the sole adjacent network element, whereas the pseudo-node has all the network elements of the LAN as adjacent network elements. This allows to reduce the amount of messages LSP transmitted by the network elements for exchanging the respective adjacency lists.

If the communication network comprises network elements operating according to the network layer protocol CLNP (hereinafter called CLNP network element), network elements operating according to the network layer protocol IP (hereinafter called IP network element), and any network elements operating according to both network layer protocols (hereinafter called dual network elements), the typically used routing protocol is the Integrated IS-IS routing protocol. The Integrated IS-IS protocol is defined in the paper "Network Working Group_ Request for Comments: 1995, Ross W. Callon, Digital Equipment Corporation, December 1990, Use of OSI IS-IS for Routing n TCP/IP and Dual Environments", briefly RFC 1195.

The Integrated IS-IS routing protocol provides to apply a SPF algorithm to the adjacency lists of the various network elements to route both packets formatted according to the network layer protocol CLNP (hereinafter called CLNP packets) and packets formatted according to the network layer protocol IP (hereinafter called IP packets).

In order to route CLNP and IP packets by using the Integrated IS-IS protocol, it is necessary that all the network elements operate according to the same network layer protocol. In other words, the communication network must be made up of network elements which are all dual: it is not possible to mix in the same network dual network elements with CLNP network elements and/or with IP network elements. Obviously the same restrictions pertains also to a simple LAN.

The specific topological restrictions of RFC 1195 are described in detail in its section 1.4 ("Support of Mixed Routing Domains").

When the LAN comprises CLNP network elements, IP network elements and dual network elements, the routing can be performed by using the above mentioned Integrated IS-IS routing protocol.

Also in this case, in order to effectively use the resources of the LAN, the broadcast subnetwork is represented by a pseudo-node, but in case of mixed LANs one or more pseudo-nodes can be elected.

In fact, in order to implement the Integrated IS-IS protocol in a communication network having CLNP network elements, IP network elements and dual network elements, ITU-T Recommendation G.7712/Y.1703 (03/2003), paragraph 7.1.10.1.1, states that each network element must consider as adjacent thereto only the network elements supporting the same network layer protocol that it supports. Therefore, a CLNP network element considers as adjacent thereto only CLNP network elements and dual network elements. An IP network element considers as adjacent thereto only IP network elements and dual network elements. A dual network element considers as adjacent thereto both CLNP and IP network elements.

With such a protocol, on the LAN, the CLNP network elements will elect the CLNP pseudo-node and the IP network elements will elect the IP pseudo-node.

A dual network element can participate on both the pseudo-node election processes and as a result it can win both the processes, it then win one of the processes or it can loose both. In any case it may cause packet loss and so the topological restriction of RFC 1195 are valid also in case of a simple LAN.

To overcome this limitation, and thus transmit CLNP and IP packets in a communication network comprising CLNP network elements, IP network elements and any dual network elements, ITU-T G.7712/Y.1703 (03/2003), paragraph 7.1.8, specifies that is possible to encapsulate the CLNP(IP) packets into corresponding IP(CLNP) packets upstream of an IP(CLNP) network element, and to de-encapsulate them into the original CLNP(IP) packets downstream of the IP(CLNP) network element. The network layer PDU (Protocol Data Unit, i.e. packet) encapsulation function is based on Generic Routing Encapsulation (GRE), as specified in "Network Working Group, Request for Comments: 2784, Category: Standards Track, D. Farinacci et al., March 2000", briefly "RFC 2784".

ITU-T G.7712/Y.1703, paragraph 7.1.9, specifies the network layer PDU tunneling function that provides a static tunnel between two network elements supporting the same network layer protocol.

Also in this case, in order to effectively use the resources of the LAN, one or more pseudo-nodes are elected. The election criteria are described in the ITU-T G.7712/Y.1703 , paragraph B.4.3.5.1.

As it will described in greater detail below, the first criterion provides to elect only one pseudo-node supporting all the network layer protocols present in the LAN. This means that the pseudo-node has to be a dual network element. The second criterion provides to select a different pseudo-node for each network layer protocol present in the LAN. In other words, the CLNP network elements will elect the CLNP pseudo-node and the IP network elements will elect the IP pseudo-node.

EP 1 392 026 discloses a modified Shortest Path First routing algorithm for use in a heterogeneous network. The routing algorithm is modified to include predetermined heterogeneous characteristics of the network nodes and to take these characteristics into account when calculating the shortest paths. For example, information may be included in the algorithm which identifies heterogeneous network nodes as it calculates shortest paths. Once a node has been identified as heterogeneous, i.e., capable of supporting at least two protocol sets, this information is carried over into subsequent path entries created by the routing algorithm. The algorithm then uses the encapsulation capability identifier in the calculation of the shortest paths by including the cost of auto-tunneling between heterogeneous nodes to be taken into account when determining the short path.

### Summary of the Invention

The criteria for electing the pseudo-node(s) according to the ITU-T G.7712N. 1703, paragraph B.4.3.5.1. present some drawbacks.

First, according to both the criteria, the election has to be manually performed by the operator who configures the priority of the network element and has thus to know a *priori* the network layer protocol supported by each network element present in the LAN. In fact, according to the first criterion, the operator should be able to identify at least one dual network element.

Second, it is assumed that network elements supporting a network layer protocol different from those already present (e.g. the network layer protocol lPv6 ("Internet Protocol Version 6")) are connected to the LAN. If the role of pseudo-node is performed by a dual network element, new network elements are not considered as adjacent by the pseudo-node, as these network elements do not operate according to any of the network layer protocol of the pseudo-node. If two different pseudo-nodes are selected for the two sub-networks, also in this case the new network elements are not considered as adjacent by any pseudo-node, because also in this case these network elements do not operate according to any network layer protocol of the pseudo-nodes. In this case there will be another pseudo-node, the IPv6 pseudo-node.

As described above, the pseudo-node was introduced in order to reduce complexity and improve performance and scalability of a LAN. On the contrary, when considering that on the same LAN can be present network elements of all possible combinations, i.e. CLNP, IP, IPv6, Dual (i.e. CLNP+IP), CLNP+IP, CLNP+IPv6, IP+IPv6, and CLNP+IP+IPvf, the complexity of the LAN increase hugely, because it is needed to elect a pseudo-node for each network layer protocol supported by the LAN.

Therefore, the Applicant has faced the problem to provide a method for routing data packets in a packet-switched LAN capable of overcoming the above mentioned drawbacks.

In particular, the Applicant has faced the problem to provide a method for routing data packets in a packet-switched LAN comprising CLNP network elements and IP network elements, and possibly also dual network elements, which is capable of automatically selecting a pseudo-node, i.e. without the operator having to know a *priori* the network layer protocols supported by the various network elements, and which does not use the above cited encapsulation.

In this way it is avoided the risk that one or more network elements are considered not adjacent (and thus ignored) by the pseudo-node, and that any packets are lost.

According to a first aspect, the present invention provides a method for routing data packets in a packet-switched Local Area Network, LAN, wherein the packet-switched LAN comprises a first network element and further network elements, wherein the first network element supports a first network layer protocol, wherein the method comprises a step of virtually modifying the structure of said packet-switched LAN so as to obtain a star-topology network and electing one network element, among the first network element and the further network elements, to act as a pseudo-node, i.e. as a virtual network element being a center of said star-topology and being configured to consider as adjacent the first network element and said further network elements independently of the network layer protocol that said first network element and said further network elements support; and wherein the method comprises, at the network element:
- receiving first packets formatted according to the first network layer protocol;
- running a first shortest path algorithm for obtaining a first shortest path, the first shortest path algorithm considering only said pseudo-node and, among said further network elements, only network elements supporting said first network layer protocol, while ignoring network elements that do not support it; and
- routing the received first packets to a network element belonging to the first shortest path and placed immediately downstream of the pseudo-node.

Preferably, the first network element further supports a second network layer protocol and the method further comprises, at the first network element:
- receiving second packets formatted according to the second network layer protocol;
- running a second shortest path algorithm for obtaining a second shortest path, the second shortest path algorithm considering only said pseudo-node and, among said further network elements, only network elements supporting said second network layer protocol, while ignoring network elements that do not support it; and
- routing the received second packets to a network element belonging to the second shortest path and placed immediately downstream of the pseudo-node.

Preferably, the method further comprises at the pseudo-node:
- providing a pseudo-node adjacency list by considering as adjacent to the pseudo-node both the first network element and all the further network elements of the packet-switched LAN, independently of the network layer protocol they support;
- transmitting an adjacency message to the first network element and to the further network elements, the adjacency message comprising information relating to the pseudo-node adjacency list.

Profitably, the method further comprises at said first network element:
- providing a network element adjacency list by considering as adjacent to the network element only the first pseudo-node; and
- transmitting a network layer protocol message to the pseudo-node and to the further network elements, the network layer protocol message comprising information relating to the network layer protocol(s) that the first network element supports.

Preferably, at the first network element, the first shortest path algorithm performs the following operations:
- it determines from the adjacency information that the packet-switched LAN comprises the further network elements;
- it determines from the network layer protocol information which of the further network elements support the first network layer protocol;
- it calculates the first shortest path from a source network element to a destination network element, by considering the pseudo-node and only those network elements supporting the first network layer protocol, thus ignoring the network elements that do not support it;
- based on the first shortest path, it associates to a destination address of the destination network element a network element which belongs to the first shortest path and is adjacent to said pseudo-node.

Preferably, at the first network element, the second shortest path algorithm performs the following operations:
- it determines from the adjacency information that the packet-switched LAN comprises the further network elements;
- it determines from the network layer protocol information which of the further network elements support the second network layer protocol;
- it calculates the second shortest path from a source network element to a destination network element, by considering the pseudo-node and only those network elements supporting the second network layer protocol, thus ignoring the network elements that do not support it;
- based on the second shortest path, it associates to a destination address of the destination network element a network element which belongs to the second shortest path and is adjacent to the pseudo-node.

Preferably, the information are comprised in messages from the pseudo-node and the further network elements.

Preferably, the messages are LSP, Link State Packets, messages.

Preferably, the routing is performed through at least one routing table.

According to a further aspect, the present invention provides a packet-switched Local Area Network, LAN, wherein the packet-switched LAN comprises a first network element and further network elements, wherein the first network element supports a first network layer protocol, wherein the structure of said packet-switched LAN is virtually modified so as to obtain a star-topology network, and wherein one network element, among the first network element and the further network elements, is elected to act as a pseudo-node, i.e. as a virtual network element being a center of said star-topology and being configured to consider as adjacent the first network element and said further network elements independently of the network layer protocol that said first network element and said further network elements support; and wherein the first network element is configured for:
- receiving first packets formatted according to the first network layer protocol;
- running a first shortest path algorithm for obtaining a first shortest path, the first shortest path algorithm considering only said pseudo-node and, among said further network elements, only network elements supporting said first network layer protocol, while ignoring network elements that do not support it; and
- routing the received first packets to a network element belonging to the first shortest path and placed immediately downstream of the pseudo-node.

Preferably, the first network element further supports a second network layer protocol and the first network element is further configured for:
- receiving second packets formatted according to the second network layer protocol;
- running a second shortest path algorithm for obtaining a second shortest path, the second shortest path algorithm considering only said pseudo-node and, among said further network elements, only network elements supporting said second network layer protocol, while ignoring network elements that do not support it; and
- routing the received second packets to a network element belonging to the second shortest path and placed immediately downstream of the pseudo-node.

Profitably, the pseudo-node is configured for:
- providing a pseudo-node adjacency list by considering as adjacent to the pseudo-node both said first network element and all the further network elements of the packet-switched LAN, independently of the network layer protocol they support;
- transmitting an adjacency message to the first network element and to the further network elements, the adjacency message comprising information relating to the pseudo-node adjacency list.

Preferably, the network element is configured for:
- providing a network element adjacency list by considering as adjacent to the first network element only the pseudo-node; and
- transmitting a network layer protocol message to the pseudo-node and to the further network elements, the network layer protocol message comprising information relating to the network layer protocol(s) that the first network element supports.

Preferably, the first shortest path algorithm at the first network element performs the following operations:
- it determines from the adjacency information that the packet-switched LAN comprises the further network elements;
- it determines from the network layer protocol information which of the further network elements support the first network layer protocol:
- it calculates the first shortest path from a source network element to a destination network element, by considering the pseudo-node and only those network elements supporting the first network layer protocol, thus ignoring the network elements that do not support it;
- based on the first shortest path, it associates to a destination address of the destination network element a network element which belongs to the first shortest path and is adjacent to the pseudo-node.

Preferably, the second shortest path algorithm at the first network element, performs the following operations:
- it determines from the adjacency information that the packet-switched LAN comprises the further network elements;
- it determines from the network layer protocol information which of the further network elements support the second network layer protocol;
- it calculates the second shortest path from a source network element to a destination network element, by considering the pseudo-node and only those network elements supporting the second network layer protocol, thus ignoring the network elements that do not support it;
- based on the second shortest path, it associates to a destination address of the destination network element a network element which belongs to the second shortest path and is adjacent to the pseudo-node.

### Brief description of the drawings

The present invention will be better understood by reading the following detailed description, given by way of example and not of limitation, to be read by referring to the accompanying drawings, wherein:
- Figure 1 shows a LAN using the Integrated IS-IS routing protocol and a mechanism for electing a pseudo-node according to the known first criterion above mentioned;
- Figure 2 shows a LAN using the Integrated IS-IS routing protocol and a mechanism for electing a pseudo-node according to the known second criterion above mentioned;
- Figure 3 shows a LAN using the method for routing data packets according to an embodiment of the present invention;
- Figure 4 shows in detail the structure of a network element of the LAN of Figure 3; and
- Figure 5 shows the LAN of Figure 3 when a further network element is connected thereto.

### Detailed description of preferred embodiments of the invention

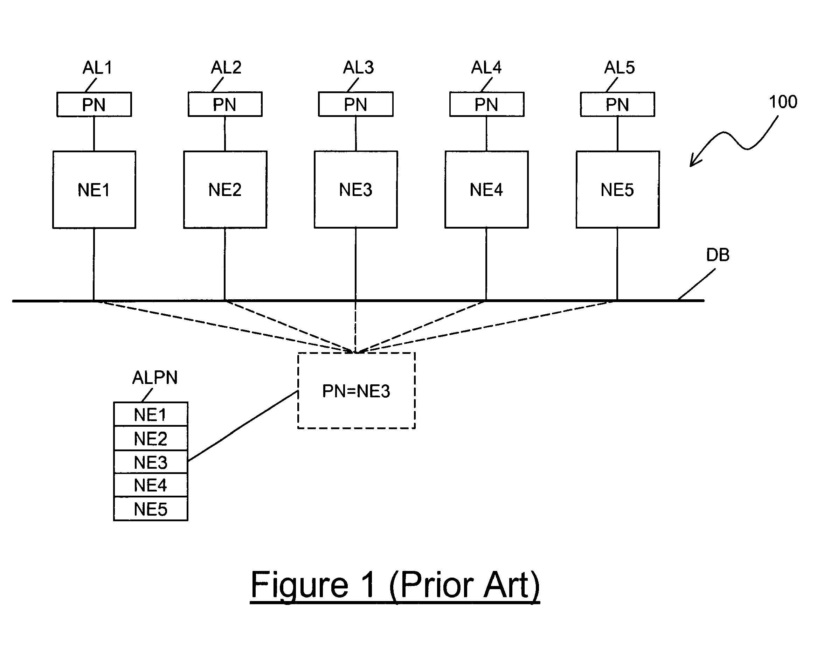

Figure 1 shows a LAN 100 using the Integrated IS-IS routing protocol and a mechanism for electing a pseudo-node according to the first criterion above mentioned.

For simplicity, the exemplifying LAN 100 is formed by five network elements NE1-NE5 connected by means of a data bus DB. Moreover, it is assumed by way of example that the network elements NE1 and NE2 are CLNP network elements, the network element NE3 is a dual network element, and the network elements NE4 and NE5 are IP network elements.

As the ITU-T G.7712/Y.1703, paragraph 7.1.10.1.1 states that each network element must consider as adjacent thereto only network elements supporting the same network layer protocol that it supports, and as the pseudo-node must be adjacent to all the network elements of the LAN, the role of pseudo-node must be assigned to a network element which can be considered adjacent by all the other network elements, i.e. a dual network element.

In this case the operator of the LAN must set on high the priority of a dual network element, e.g. the network element NE3, so that it is elected as pseudo-node.

In fact, if the dual network element NE3 is chosen as the pseudo-node, as shown in Figure 1, all the network elements NE1-NE5 have a respective adjacency list AL1-AL5 containing the pseudo-node, and the pseudo-node has an adjacency list ALPN containing all the network elements NE1-NE5.

On the other hand, if a network element supporting one network layer protocol is chosen as pseudo-node (e.g. the CLNP network element NE2), this network element could not be considered as adjacent by the IP network elements NE4 and NE5. In practice, the Integrated IS-IS routing protocol would ignore the sub-network of the LAN comprising IP network elements, which could not thus operate.

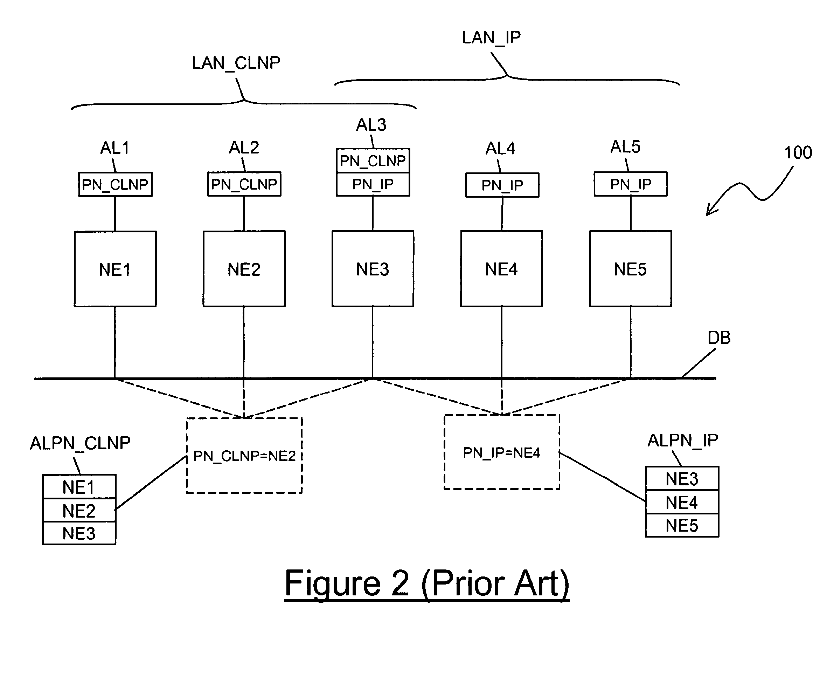

Figure 2 shows a LAN 100 using the Integrated IS-IS routing protocol and a mechanism for electing a pseudo-node according to the second criterion above mentioned.

LAN 100 can be considered as divided into two sub-networks, a first subnetwork, designed as LAN_CLNP, and a second sub-network, designed as LAN_IP. In particular, the sub-network LAN_CLNP comprises all the network elements operating according to the network layer protocol CLNP, i.e. the network elements NE1, NE2 and NE3, and the sub-network LAN_IP comprises all the network elements operating according to the network layer protocol IP, i.e. the network elements NE3, NE4 and NE5.

As mentioned above, the second criterion provides to elect two pseudo-nodes, one for each sub-network of the LAN.

For example, the CLNP network element NE2 can be chosen as pseudo-node PN_CLNP of the sub-network LAN_CLNP, and the IP network element NE4 can be chosen as pseudo-node PN_IP of the sub-network LAN_IP. It results that the network elements NE1, NE2 have an adjacency list, AL1 and AL2 respectively, containing the pseudo-node PN_CLNP, the network elements NE4 and NE5 have an adjacency list, AL4 and AL5 respectively, containing the pseudo-node PN_IP, and the network element NE3 has an adjacency list AL3 containing both pseudo-nodes PN_CLNP and PN_IP. On the other hand, the pseudo-node PN_CLNP has an adjacency list ALPN_CLNP containing the network elements NE1, NE2 and NE3 and the pseudo-node PN_IP has an adjacency list ALPN_IP containing the network elements NE3, NE4 and NE5.

In this case, the operator of the LAN must set on low the priority of the dual network element(s), i.e. the network element NE3, so that it is not elected as pseudo-node.

Therefore, each of the sub-networks LAN_CLNP and LAN_IP is suitable for properly operating, thereby allowing to use all the network elements for routing CLNP packets and IP packets, without losing any portion of the LAN 100.

However, as stated above, the Integrated IS-IS routing protocol provides to apply a SPF algorithm to the adjacency lists of the various network elements of the LAN to route both CLNP and IP packets.

It is assumed, for example, that one wishes to transmit a flow of CLNP packets P_CLNP through the LAN 100. By applying a single SPF algorithm to all the network elements and using the either the first or the second criteria for electing one or more pseudo-node abode described, a wrong path between, for example, a CLNP-only network element and a IP-only network element could occur.

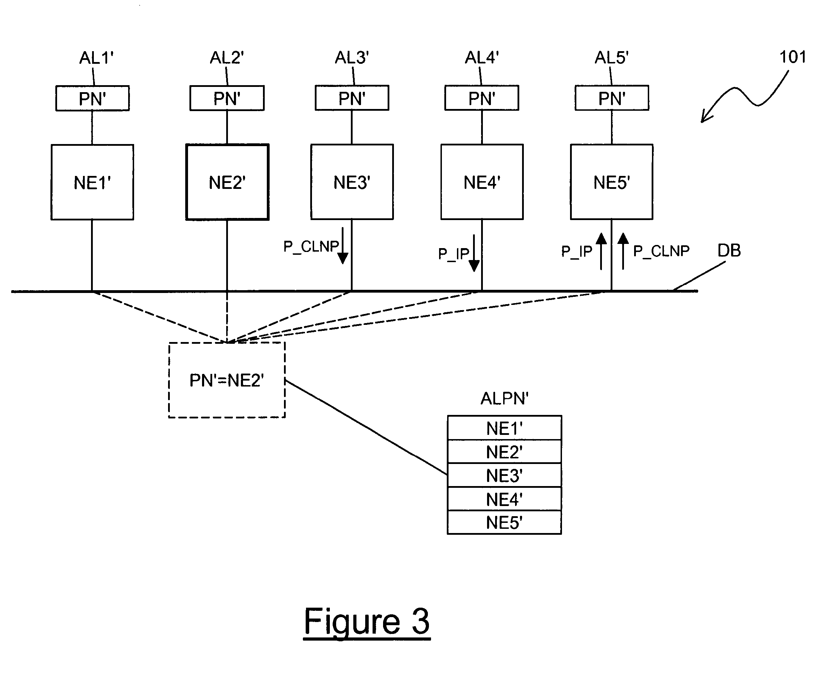

Figure 3 shows a packet-switched LAN 101 suitable for implementing the method for routing data packets according to an embodiment of the present invention.

For simplicity, LAN 101 comprises five network elements NE1'-NE5' connected by means of a data bus DB. Moreover, it is assumed by way of example that the network elements NE1' and NE5' are CLNP network elements, the network elements NE2' and NE4' are IP network elements, and the network element NE3' is a dual network element.

As it will be described in greater detail below, the method according to one embodiment of the invention provides to equip each network element of the LAN 101 with a different SPF algorithm for each network layer protocol supported by the network element itself and to configure each SPF algorithm in such a way that it considers only the network elements operating according to the corresponding network layer protocol, thus ignoring the network elements which do not operate according to the corresponding network layer protocol.

Further, the inventive method provides to elect as pseudo-node any network element of the LAN 101, independently of the network layer protocol that it supports, to configure each network element of the LAN 101 so that it considers as adjacent in its adjacency list the elected pseudo-node, even if the role of pseudo-node is performed by a network element operating according to a different network layer protocol, and to configure the pseudo-node so that it considers as adjacent all the network elements of the LAN 101, independently of the network layer protocol that they support. It is assumed, for example, that a network element of the LAN 101 is elected as pseudo-node, e.g. the IP network element NE2'.

Preferably, each network element NE1'-NE5' and the pseudo-node PN' compile an adjacency list, AL1'-AL5' and ALPN', respectively. In particular, the adjacency lists AL1'-AL5' contain the pseudo-node PN' as a sole adjacency, whereas the adjacency list ALPN' contains as adjacencies all the network elements NE1'-NE5'. It is noted that, although the role of pseudo-node PN' is performed by an IP network element (i.e. the network element NE2'), it is considered as adjacent also by network elements that do not support the network layer protocol IP (i.e. the network elements NE1' and NE5'). Similarly, the pseudo-node PN' considers as adjacent all the network elements of the LAN 101, including those that do not support the network layer protocol IP.

Subsequently, each network element NE1'-NE5' and the pseudo-node PN' exchange the respective adjacency lists each other, preferably through the above mentioned messages LSP.

According to embodiments of the invention, at least one message LSP (in particular the first message LSP, or "LSP number zero") generated by a network element contains, in addition to the adjacency list of the network element, a field PS ("Protocol Supported"), wherein the list of the types of network layer protocols supported by the network element is stored.

After the reception of messages LSP, the network elements NE1'-NE5' know all the other network elements formed the LAN, which are listed in the adjacency list ALPN' of the pseudo-node PN', as well as the network layer protocol(s) supported by the other network elements, which are stored in the fields PS of the messages LSP of the other network elements.

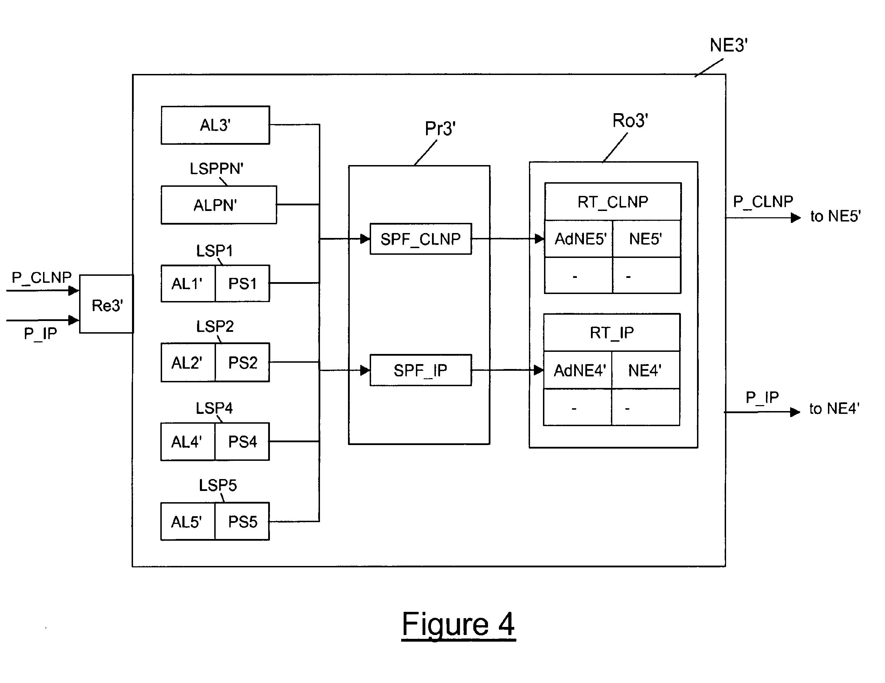

A possible structure embodiment of of the network element NE3' is shown in greater detail in Figure 4.

The network element NE3' compiles its adjacency list AL3' and receives by the other network elements and by the pseudo-node PN' information concerning their adjacency lists and the types of network layer protocols that they support. For example:
- message LSPPN' received from the pseudo-node PN' contains the adjacency list ALPN' of the pseudo-node, comprising all the network elements of the LAN, being the pseudo-node adjacent to all the network elements of the LAN;
- messages LSP2 and LSP4 received from the network elements NE2' and NE4' contain the adjacency list AL2' and AL4' of the network elements NE2' and NE4' and, being both the network elements NE2' and NE4' IP network elements, the field PS2 and PS4 indicate that the network elements NE2' and NE4' support the network layer protocol IP;
- message LSP5 received from the network element NE5' contains the adjacency list AL5' of the network element NE5' and, being the network element NE5' an IP network element, the field PS5 indicates that the network element NE5' supports the network layer protocol IP.

As above mentioned, according to preferred embodiments of the invention, it is provided to equip each network element of the LAN 101 with a different SPF algorithm for each different network layer protocol supported by the network element.

Therefore, preferably, the network element NE3' comprises a processor Pr3' configured to implement a first SPF algorithm corresponding to the network layer protocol CLNP (designated as SPF_CLNP in Figure 4) and a second SPF algorithm corresponding to the network layer protocol IP (designated as SPF_IP in Figure 4). Preferably, the first SPF algorithm SPF_CLNP is suitable for calculating, based on the adjacency lists AL1'-AL5' and ALPN' and the types of network layer protocols supported by the other network elements NE1'-NE5', a first routing table RT_CLNP for CLNP packets, as it will be described in greater detail below. Moreover, preferably, the second SPF algorithm SPF_IP is suitable for calculating, based on the adjacency lists AL1'-AL5' and ALPN' and the types of network layer protocols supported by the network elements NE1'-NE5' a second routing table RT_IP for IP packets, as it will be described in greater detail below.

In particular, with reference to the other network elements of the LAN, being the network elements NE1' and NE5' CLNP network elements, they are provided with a respective processor (not shown in the drawings) suitable for implementing only the first SPF algorithm SPF_CLNP.

On the other hand, being the network elements NE2' and NE4' IP network elements, they are provided with a respective processor (not shown in the drawings) suitable for implementing only the second SPF algorithm SPF_IP.

It is assumed that one wishes to transmit a flow of CLNP packets P_CLNP from a source network element (e.g. the network element NE3') to a destination network element (e.g. the network element NE5').

The packets P_CLNP are received at a receiving device Re3' provided in the network element NE3'. The addresses of the source and destination network elements, AdNE3' and AdNE5' respectively, are preferably stored in the header of each packet of the flow of CLNP packets P_CLNP.

In order to route the flow of CLNP packets P_CLNP, the network element NE3' preferably runs the first SPF algorithm SPF_CLNP. In particular, the first SPF algorithm SPF_CLNP preferably performs the following operations:
- it determines from the adjacency list ALPN' of the pseudo-node PN' which are the other network elements of the LAN, i.e. NE1', NE2', NE4' and NE5';
- it determines from the fields PS1, PS2, PS4 and PS5 of the network elements NE1', NE2', NE4' and NE5' the network elements supporting the network layer protocol CLNP. In the example, the network layer protocol CLNP is supported by the network elements NE3' and NE5';
- it calculates the shortest path from the network element NE3' to the network element NE5', by considering only the pseudo-node PS' (independently of the network layer protocol supported by the network element acting as pseudo-node) and the network elements supporting the network layer protocol CLNP and ignoring the network elements that do not support it, thereby obtaining as result the path NE3'→PN'→NE5';
- based on the calculated shortest path, a routing device Re3' routes the packets P_CLNP by creating a row in the first routing table RT_CLNP, such a row associating to the address AdNE5' of the network element belonging to the calculated shortest path and placed immediately downstream of (i.e. adjacent to) the pseudo-node PN', i.e. the network element NE5'.

Therefore, the packets P_CLNP are transmitted from the source network element NE3' to the destination network element NE5'.

Therefore, advantageously, the LAN 101 shown in Figure 3 is capable of routing CLNP packets, although a network element supporting the network layer protocol IP has been elected as pseudo-node PN'. In other words, to transmit packets P_CLNP it is not necessary to elect as pseudo-node a dual network element (according to the first criterion above mentioned) or a network element supporting the same network layer protocol (according to the second criterion above mentioned). This advantageously allows to elect the pseudo-node without knowing a *priori* the network layer protocols supported by the various network elements of the LAN. Therefore, advantageously, the pseudo-node can be automatically elected.

Indeed, due to the fact that the SPF algorithm (when it is run for routing CLNP packets) considers only the network elements supporting the network layer protocol CLNP and the pseudo-node, independently of the network layer protocol supported by the network element acting as the pseudo-node, and that it compiles the routing table by associating to the destination address of the packets the network element included in the shortest path and placed immediately downstream of the pseudo-node PN', it is possible to elect any network element acting as the pseudo-node without knowing a *priori* the network layer protocol that it supports, in the meanwhile assuring the routing of both CLNP and IP packets.

With reference again to LAN 101 of Figure 3, it is assumed that one wishes to transmit a flow of IP packets P_IP from the source network element NE3' to a destination network element, e.g. the network element NE4'. The addresses of the source and destination network elements, AdNE3' and AdNE4' respectively, are preferably stored into the header of each packet of the flow of packets P_IP.

In order to route the flow of IP packets P_IP, the processor Pr3' of the network element NE3' preferably performs the second SPF algorithm SPF_IP. In particular, the second SPF algorithm SPF_IP preferably performs the following operations:
- it determines from the adjacency list ALPN' of the pseudo-node PN' which are the other network elements of the LAN, i.e. NE1', NE2', NE4' and NE5';
- it determines from fields PS1, PS2, PS4 and PS5 of the network elements NE1', NE2', NE4' and NE5' the network elements supporting the network layer protocol IP. In the example, the network layer protocol IP is supported by the network elements NE2' and NE4';
- it calculates the shortest path from the network element NE3' to the network element NE4', by considering only the pseudo-node PN' (independently of the network layer protocol supported by the network element acting as the pseudo-node) and the network elements supporting the network layer protocol IP, and by ignoring the network elements which do not support it, thereby obtaining as result the path NE3'→PN'→NE4';
- based on the shortest path calculated, the routing device Ro3' routes the packets P_IP by creating a row within the second routing table RT_IP, such a row associating to the address AdNE4' the network element belonging to the shortest path calculated and placed immediately downstream of (i.e. adjacent to) the pseudo-node PN', i.e. the network element NE4'.

Packets P_IP are thus transmitted from the source network element NE3' to the destination network element NE4'.

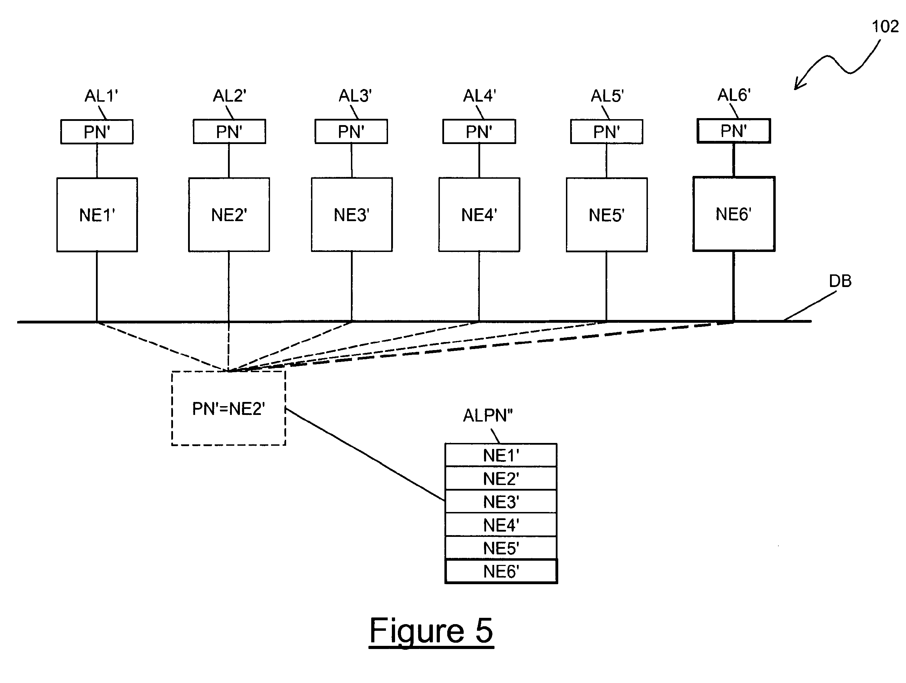

With reference to Figure 5, it is finally assumed that a network element NE6' operating according to a different network layer protocol, e.g. the network layer protocol IPv6, is connected to the LAN 101 of Figure 3, so obtaining a LAN 102.

Advantageously, by applying the above described routing method, the presence of the new network element NE6' does not affect in any way the routing of packets P_CLNP and P_IP in the LAN 102, as described above with reference to Figure 3.

Indeed, in this case the adjacency table ALPN' of the pseudo-node PN' also contains the network element NE6'. However, both the first SPF algorithm SPF_CLNP and the second SPF algorithm SPF_IP, which are running at the network element NE3', will exclude the network element NE6' from the calculation of the shortest path between the network elements NE3' and NE5' (when packets P_CLNP have to be routed) and between the network elements NE3' and NE4' (when packets P_IP have to be routed).

Therefore, advantageously, since the network element elected as the pseudo-node considers as network elements adjacent thereto all the network elements of the LAN, independently of the network layer protocol they support, when a network element supporting a new network layer protocol is connected to the LAN, this added network element is considered as a network element adjacent to the pseudo-node and thus it is automatically inserted into the adjacency list of the pseudo-node.

Further advantageously, the new network element NE6' can also be elected as the pseudo-node, without causing the exclusion of part of the LAN.

Further advantageously, the inventive method provides a greater scalability of a packet-switched LAN and a lower attention by the operator of the LAN, who has not to set the priority of the network element(s) to be elected as pseudo-node.

## Claims

1. A method for routing data packets in a packet-switched Local Area Network, LAN, (101),
wherein said packet-switched LAN (101) comprises a first network element (NE3') and further network elements (NE1', NE2', NE4', NE5'), wherein said first network element (NE3') supports a first network layer protocol (CLNP),
wherein said method comprises a step of virtually modifying the structure of said packet-switched LAN (101) so as to obtain a star-topology network and electing one network element (NE2'), among said first network element (NE3') and said further network elements (NE1', NE2', NE4', NE5'), to act as a pseudo-node (PN'), i.e. as a virtual network element being a center of said star and being configured to consider as adjacent said first network element (NE3') and said further network elements (NE1', NE2', NE4', NE5') independently of the network layer protocol that said first network element (NE3') and said further network elements (NE1', NE2', NE4', NE5') support; and
wherein said method comprises, at said first network element (NE3'):
a) receiving first packets (P_CLNP) formatted according to said first network layer protocol (CLNP);
b) running a first shortest path algorithm (SPF_CLNP) for obtaining a first shortest path, said first shortest path algorithm considering only said pseudo-node (PN') and, among said further network elements (NE1', NE2', NE4', NE5'), only network elements (NE1', NE5') supporting said first network layer protocol (CLNP), while ignoring network elements (NE2', NE4') that do not support it; and
c) routing said received first packets (P_CLNP) to a network element (NE5') belonging to said first shortest path and placed immediately downstream of said pseudo-node (PN').

2. The method according to claim 1, wherein said first network element (NE3') further supports a second network layer protocol (IP), wherein said method further comprises, at said first network element (NE3'):
- receiving second packets (P_IP) formatted according to said second network layer protocol (IP);
- running a second shortest path algorithm (SPF_IP) for obtaining a second shortest path, said second shortest path algorithm considering only said pseudo-node (PN') and, among said further network elements (NE1', NE2', NE4', NE5'), only network elements (NE2', NE4') supporting said second network layer protocol (IP), while ignoring network elements (NE1', NE5') that do not support it; and
- routing said received second packets (P_IP) to a network element (NE4') belonging to said second shortest path and placed immediately downstream of said pseudo-node (PN').

3. The method according to any of claims 1 or 2, wherein it further comprises at said pseudo-node (PN'):
- providing a pseudo-node adjacency list (ALPN') by considering as adjacent to said pseudo-node (PN') both said first network element (NE3') and all the further network elements (NE1', NE2', NE4', NE5') of said packet-switched LAN (101), independently of the network layer protocol they support;
- transmitting an adjacency message (LSPPN') to said first network element (NE3') and to said further network elements (NE1', NE2', NE4', NE5'), said adjacency message (LSPPN') comprising information relating to the pseudo-node adjacency list (ALPN').

4. The method according to any of claims 1 to 3, wherein it further comprises, at said first network element (NE3'):
- providing a network element adjacency list (AL3') by considering as adjacent to said first network element (NE3') only the pseudo-node (PN'); and
- transmitting a network layer protocol message (LSP3) to said pseudo-node (PN') and to the further network elements (NE1', NE2', NE4', NE5'), said network layer protocol message (LSP3) comprising information relating to the network layer protocol(s) that said first network element (NE3') supports.

5. The method according to claim 1, wherein at said first network element (NE3'), said first shortest path algorithm (SPF _CLNP) performs the following operations:
- it determines from said adjacency information (ALPN') that said packet-switched LAN (101) comprises said further network elements (NE1', NE2', NE4', NE5');
- it determines from said network layer protocol information (PS1, PS2, PS4, PS5) which of the further network elements (NE1', NE2', NE4', NE5') support the first network layer protocol (CLNP);
- it calculates the first shortest path from a source network element to a destination network element, by considering the pseudo-node (PN') and only those network elements (NE1', NE5') supporting said first network layer protocol (CNLP), thus ignoring the network elements (NE2', NE4') that do not support it;
- based on the first shortest path, it associates to a destination address (AdNE5') of said destination network element a network element (NE5') which belongs to the first shortest path and is adjacent to said pseudo-node (PN').

6. The method according to claim 2, wherein at said first network element (NE3'), said second shortest path algorithm (SPF_IP) performs the following operations:
- it determines from said adjacency information (ALPN') that said packet-switched LAN (101) comprises said further network elements (NE1', NE2', NE4', NE5');
- it determines from said network layer protocol information (PS1, PS2, PS4, PS5) which of the further network elements (NE1', NE2', NE4', NE5') support the second network layer protocol (IP);
- it calculates the second shortest path from a source network element to a destination network element, by considering the pseudo-node (PN') and only those network elements (NE2', NE4') supporting said second network layer protocol (IP), thus ignoring the network elements (NE1', NE5') that do not support it;
- based on the second shortest path, it associates to a destination address (AdNE4') of said destination network element a network element (NE4') which belongs to the second shortest path and is adjacent to said pseudo-node PN'.

7. The method according to claim 1, wherein said information (ALPN', PS1, PS2, PS4, PS5) are comprised in messages from the pseudo-node (PN') and the further network elements (NE1', NE2', NE4', NE5').

8. The method according to claim 7, wherein said messages are LSP, Link State Packets, messages.

9. The method according to any of claims 1 to 8, wherein said routing (RT_CLNP; RT_IP) is performed through at least one routing table (RT_CLNP; RT_IP).

10. A packet-switched Local Area Network, LAN, (101),
wherein said packet-switched LAN (101) comprises a first network element (NE3') and further network elements (NE1', NE2', NE4', NE5'), wherein said first network element (NE3') supports a first network layer protocol (CLNP; IP),
wherein the structure of said packet-switched LAN is virtually modified so as to obtain a star-topology network, and wherein one network element (NE2'), among said first network element (NE3') and said further network elements (NE1', NE2', NE4', NE5'), is elected to act as a pseudo-node (PN'), i.e. as a virtual network element being a center of said star-topology and being configured to consider as adjacent said first network element (NE3') and said further network elements (NE1', NE2', NE4', NE5') independently of the network layer protocol that said first network element (NE3') and said further network elements (NE1', NE2', NE4', NE5') support; and
wherein said first network element (NE3') is configured for:
a) receiving first packets (P_CLNP; P_IP) formatted according to said first network layer protocol (CLNP; IP);
b) running a first shortest path algorithm (SPF_CLNP; SPF_IP) for obtaining a first shortest path, said first shortest path algorithm considering only said pseudo-node (PN') and, among said further network elements (NE1', NE2', NE4', NE5'), only network elements (NE1', NE5') supporting said first network layer protocol (CLNP; IP), while ignoring network elements (NE2', NE4') that do not support it; and
c) routing said received first packets (P_CLNP: P_IP) to a network element (NE5') belonging to said first shortest path and placed immediately downstream of said pseudo-node (PN').

11. The packet-switched LAN according to claim 10, wherein said first network element (NE3') further supports a second network layer protocol (IP), wherein said first network element (NE3') is further configured for:
- receiving second packets (P_IP) formatted according to said second network layer protocol (IP);
- running a second shortest path algorithm (SPF_IP) for obtaining a second shortest path, said second shortest path algorithm considering only said pseudo-node (PN') and, among said further network elements (NE1', NE2', NE4', NE5'), only network elements (NE2', NE4') supporting said second network layer protocol, while ignoring network elements (NE1', NE5') that do not support it; and
- routing said received second packets (P_IP) to a network element (NE4') belonging to said second shortest path and placed immediately downstream of said pseudo-node (PN').

12. The packet-switched LAN according to any of claims 10 or 11, wherein said pseudo-node (PN') is configured for:
- providing a pseudo-node adjacency list (ALPN') by considering as adjacent to said pseudo-node (PN') said first network element (NE3') and to all the further network elements (NE1', NE2', NE4', NE5') of said packet-switched LAN (101), independently of the network layer protocol they support;
- transmitting an adjacency message (LSPPN') to said first network element (NE3') and to said further network elements (NE1', NE2', NE4', NE5'), said adjacency message (LSPPN') comprising information relating to the pseudo-node adjacency list (ALPN').

13. The packet-switched LAN according to any of claims 10 to 12, wherein the first network element (NE3') is configured for:
- providing a network element adjacency list (AL3') by considering as adjacent to said first network element (NE3') only the pseudo-node (PN'); and
- transmitting a network layer protocol message (LSP3) to said pseudo-node (PN') and to the further network elements (NE1', NE2', NE4', NE5'), said network layer protocol message (LSP3) comprising information relating to the network layer protocol(s) that said first network element (NE3') supports.

14. The packet-switched LAN according to claim 10, wherein said first shortest path algorithm (SPF_CLNP) at said first network element (NE3') performs the following operations:
- it determines from said adjacency information (ALPN') that said packet-switched LAN (101) comprises said further network elements (NE1', NE2', NE4', NE5');
- it determines from said network layer protocol information (PS1, PS2, PS4, PS5) which of the further network elements (NE1', NE2', NE4', NE5') support the first network layer protocol;
- it calculates the first shortest path from a source network element to a destination network element, by considering the pseudo-node (PN') and only those network elements (NE1', NE5') supporting said first network layer protocol, thus ignoring the network elements (NE2', NE4') that do not support it;
- based on the first shortest path, it associates to a destination address (AdNE5') of said destination network element a network element (NE5') which belongs to the first shortest path and is adjacent to said pseudo-node (PN').

15. The packet-switched LAN according to claim 11, wherein said second shortest path algorithm (SPF_IP) at said first network element (NE3'), performs the following operations:
- it determines from said adjacency information (ALPN') that said packet-switched LAN (101) comprises said further network elements (NE1', NE2', NE4', NE5');
- it determines from said network layer protocol information (PS1, PS2, PS4, PS5) which of the further network elements (NE1', NE2', NE4', NE5') support the second network layer protocol;
- it calculates the second shortest path from a source network element to a destination network element, by considering the pseudo-node (PN') and only those network elements (NE2', NE4') supporting said second network layer protocol, thus ignoring the network elements (NE1', NE5') that do not support it;
- based on the second shortest path, it associates to a destination address (AdNE4') of said destination network element a network element (NE4') which belongs to the second shortest path and is adjacent to said pseudo-node (PN').

## Patentansprüche

1. Ein Verfahren zum Routen von Datenpaketen in einem paketvermittelten lokalen Netzwerk, LAN, (101),
wobei das besagte paketvermittelte LAN (101) ein erstes Netzwerkelement (NE3') und weitere Netzwerkelemente (NE1', NE2', NE4', NE5') umfasst, wobei das besagte erste Netzwerkelement (NE3') ein erstes Netzwerkschichtprotokoll (CLNP) unterstützt,
wobei das besagte Verfahren einen Schritt des virtuellen Veränderns der Struktur des besagten paketvermittelten LANs (101), um ein Netzwerk in Stern-Topologie zu erhalten, und des Auswählens eines Netzwerkelements (NE2') unter dem besagten ersten Netzwerkelement (NE3') und den besagten weiteren Netzwerkelementen (NE1', NE2', NE4', NE5'), um als eine Pseudoknoten (PN'), d. h. als ein virtuelles Netzwerkelement, welches ein Mittelpunkt des besagten Sterns und derart konfiguriert ist, dass es das besagte erste Netzwerkelement (NE3') und die besagten weiteren Netzwerkelemente (NE1', NE2', NE4', NE5') als benachbart berücksichtigt, unabhängig von dem Netzwerkschichtprotokoll, welches von dem besagten ersten Netzwerkelement (NE3') und den besagten weiteren Netzwerkelementen (NE1', NE2', NE4', NE5') unterstützt wird, zu fungieren, umfasst; und
wobei das besagte Verfahren an dem besagten ersten Netzwerkelement (NE3') umfasst:
a) Empfangen von ersten Paketen (P_CLNP), welche gemäß dem besagten ersten Netzwerkschicht-Protokoll (CLNP) formatiert sind;
b) Ausführen eines Algorithmus zur Berechnung des ersten kürzesten Pfades (SPF_CLNP), um einen ersten kürzesten Pfad zu erhalten, wobei der besagte Algorithmus zur Berechnung des ersten kürzesten Pfades nur den besagten Pseudoknoten (PN') und unter den besagten weiteren Netzwerkelementen (NE1', NE2', NE4', NE5') nur Netzwerkelemente (NE1', NE5'), welche das besagte erste Netzwerkschichtprotokoll (CLNP) unterstützen, berücksichtigt und Netzwerkelemente (NE2', NE4'), welche dieses nicht unterstützen, ignoriert; und
c) Routen der besagten ersten Pakete (P_CLNP) an ein Netzwerkelement (NE5'), welches dem besagten ersten kürzesten Pfad angehört und unmittelbar stromabwärts des besagten Pseudoknotens (PN') angeordnet ist.

2. Das Verfahren nach Anspruch 1, wobei das besagte erste Netzwerkelement (NE3') weiterhin ein zweites Netzwerkschichtprotokoll (IP) unterstützt, wobei das besagte Verfahren weiterhin an dem besagten ersten Netzwerkelement (NE3') umfasst:
- Empfangen von zweiten Paketen (P_IP), welche gemäß dem besagten zweiten Netzwerkschicht-Protokoll (IP) formatiert sind;
- Ausführen eines Algorithmus zur Berechnung des zweiten kürzesten Pfades (SPF_IP), um einen zweiten kürzesten Pfades zu erhalten, wobei der besagte Algorithmus zur Berechnung des zweiten kürzesten Pfades nur den besagten Pseudoknoten (PN') und unter den besagten weiteren Netzwerkelementen (NE1', NE2', NE4', NE5') nur Netzwerkelemente (NE2', NE4'), welche das besagte zweite Netzwerkschichtprotokoll (IP) unterstützen, berücksichtigt und Netzwerkelemente (NE1', NE5'), welche dieses nicht unterstützen, ignoriert; und
- Routen der besagten zweiten Pakete (P_IP) an ein Netzwerkelement (NE4'), welches dem besagten zweiten kürzesten Pfad angehört und unmittelbar stromabwärts des besagten Pseudoknotens (PN') angeordnet ist.

3. Das Verfahren nach einem beliebigen der Ansprüche 1 oder 2, wobei es an dem besagten Pseudoknoten (PN') weiterhin umfasst:
- Bereitstellen einer Pseudoknoten-Adjazenzliste (ALPN'), indem es sowohl das besagte erste Netzwerkelement (NE3') als auch alle weiteren Netzwerkelemente (NE1', NE2', NE4', NE5') des besagten paketvermittelten LANs (101) als mit dem besagten Pseudoknoten (PN') benachbart berücksichtigt, unabhängig von dem Netzwerkschichtprotokoll, welches diese unterstützen;
- Übertragen einer Adjazenznachricht (LSPPN') an das besagte erste Netzwerkelement (NE3') und an die besagten weiteren Netzwerkelemente (NE1', NE2', NE4', NE5'), wobei die besagte Adjazenznachricht (LSPPN') Informationen in Bezug auf die Pseudoknoten-Adjazenzliste (ALPN') enthält.

4. Das Verfahren nach einem beliebigen der Ansprüche 1 bis 3, wobei es an dem besagten ersten Netzwerkelement (NE3') weiterhin umfasst:
- Bereitstellen einer Netzwerkelement-Adjazenzliste (AL3'), indem es nur den Pseudoknoten (PN') als mit dem besagten ersten Netzwerkelement (NE3') benachbart berücksichtigt; und
- Übertragen einer Netzwerkschichtprotokoll-Nachricht (LSP3) an den besagten Pseudoknoten (PN') und an die besagten weiteren Netzwerkelemente (NE1', NE2', NE4', NE5'), wobei die besagte Netzwerkschichtprotokoll-Nachricht (LSP3) Informationen in Bezug auf das/die Netzwerkschichtprotokoll(e) (ALPN'), welche(s) von dem besagten ersten Netzwerkelement (NE3') unterstützt wird/werden, enthält.

5. Das Verfahren nach Anspruch 1, wobei der besagte Algorithmus zur Berechnung des ersten kürzesten Pfades (SPF_CLNP) die folgenden Operationen an dem besagten ersten Netzwerkelement (NE3') durchführt:
- Er bestimmt, ausgehend von den besagten Adjazenzinformationen (ALPN'), dass das besagte paketvermittelte LAN (101) die besagten weiteren Netzwerkelemente (NE1', NE2', NE4', NE5') umfasst;
- er bestimmt, ausgehend von den besagten Netzwerkschichtprotokoll-Informationen (PS1, PS2, PS4, PS5), welche der weiteren Netzwerkelemente (NE1', NE2', NE4', NE5') das erste Netzwerkschichtprotokoll (CLNP) unterstützen;
- er berechnet den ersten kürzesten Pfad von einem Quell-Netzwerkelement zu einem Ziel-Netzwerkelement, indem er den Pseudoknoten (PN') und nur diejenigen Netzwerkelemente (NE1', NE5'), welche das besagte erste Netzwerkschichtprotokoll (CNLP) unterstützen, berücksichtigt und demzufolge diejenigen Netzwerkelemente (NE2', NE4'), welche dieses nicht unterstützen, ignoriert;
- er ordnet einer Zieladresse (AdNE5') des besagten Ziel-Netzwerkelements auf der Basis des ersten kürzesten Pfades ein Netzwerkelement (NE5'), welches dem ersten kürzesten Pfad angehört und mit dem besagten Pseudoknoten (PN') benachbart ist, zu.

6. Das Verfahren nach Anspruch 2, wobei der besagte Algorithmus zur Berechnung des zweiten kürzesten Pfades (SPF_IP) die folgenden Operationen an dem besagten ersten Netzwerkelement (NE3') durchführt:
- Er bestimmt, ausgehend von den besagten Adjazenzinformationen (ALPN'), dass das besagte paketvermittelte LAN (101) die besagten weiteren Netzwerkelemente (NE1', NE2', NE4', NE5') umfasst;
- er bestimmt, ausgehend von den besagten Netzwerkschichtprotokoll-Informationen (PS1, PS2, PS4, PS5), welche der weiteren Netzwerkelemente (NE1', NE2', NE4', NE5') das zweite Netzwerkschichtprotokoll (IP) unterstützen;
- er berechnet den zweiten kürzesten Pfad von einem Quell-Netzwerkelement zu einem Ziel-Netzwerkelement, indem er den Pseudoknoten (PN') und nur diejenigen Netzwerkelemente (NE2', NE4'), welche das besagte zweite Netzwerkschichtprotokoll (IP) unterstützen, berücksichtigt und demzufolge diejenigen Netzwerkelemente (NE1', NE5'), welche dieses nicht unterstützen, ignoriert;
- er ordnet einer Zieladresse (AdNE4') des besagten Ziel-Netzwerkelements auf der Basis des zweiten kürzesten Pfades ein Netzwerkelement (NE4'), welches dem zweiten kürzesten Pfad angehört und mit dem besagten Pseudoknoten (PN') benachbart ist, zu.

7. Das Verfahren nach Anspruch 1, wobei die besagten Informationen (ALPN', PS1, PS2, PS4, PS5) in Nachrichten von dem Pseudoknoten (PN') und von den weiteren Netzwerkelementen (NE1', NE2', NE4', NE5') enthalten sind.

8. Das Verfahren nach Anspruch 7, wobei die besagten Nachrichten LSP-, Link State Packets, Nachrichten sind.

9. Das Verfahren nach einem beliebigen der Ansprüche 1 bis 8, wobei das besagte Routen (RT_CLNP; RT_IP) anhand mindestens einer Routing-Tabelle (RT_CLNP; RT_IP) durchgeführt wird.

10. Ein paketvermitteltes lokales Netzwerk, LAN, (101),
wobei das besagte paketvermittelte LAN (101) ein erstes Netzwerkelement (NE3') und weitere Netzwerkelemente (NE1', NE2', NE4', NE5') umfasst, wobei das besagte erste Netzwerkelement (NE3') ein erstes Netzwerkschichtprotokoll (CLNP; IP) unterstützt,
wobei die Struktur des besagten paketvermittelten LANs virtuell verändert wird, um ein Netzwerk in Stern-Topologie zu erhalten, und wobei ein Netzwerkelement (NE2') unter dem besagten ersten Netzwerkelement (NE3') und den besagten weiteren Netzwerkelementen (NE1', NE2', NE4', NE5') ausgewählt wird, um als ein Pseudoknoten (PN'), d. h. als ein virtuelles Netzwerkelement, welches ein Mittelpunkt der besagten Stern-Topologie und derart konfiguriert ist, dass es das besagte erste Netzwerkelement (NE3') und die besagten weiteren Netzwerkelemente (NE1', NE2', NE4', NE5') als benachbart berücksichtigt, unabhängig von dem Netzwerkschichtprotokoll, welches von dem besagten ersten Netzwerkelement (NE3') und den besagten weiteren Netzwerkelementen (NE1', NE2', NE4', NE5') unterstützt wird, zu fungieren, umfasst; und
wobei das besagte erste Netzwerkelement (NE3') für die folgenden Aufgaben konfiguriert ist:
a) Empfangen von ersten Paketen (P_CLNP; P_JP), welche gemäß dem besagten ersten Netzwerkschicht-Protokoll (CLNP; IP) formatiert sind;
b) Ausführen eines Algorithmus zur Berechnung des ersten kürzesten Pfades (SPF_CLNP; SPF_IP), um einen ersten kürzesten Pfad zu erhalten, wobei der besagte Algorithmus zur Berechnung des ersten kürzesten Pfades nur den besagten Pseudoknoten (PN') und unter den besagten weiteren Netzwerkelementen (NE1', NE2', NE4', NE5') nur Netzwerkelemente (NE1', NE5'), welche das besagte erste Netzwerkschichtprotokoll (CLNP; IP) unterstützen, berücksichtigt und Netzwerkelemente (NE2', NE4'), welche dieses nicht unterstützen, ignoriert; und
c) Routen der besagten ersten Pakete (P_CLNP: P_IP) an ein Netzwerkelement (NE5'), welches dem besagten ersten kürzesten Pfad angehört und unmittelbar stromabwärts des besagten Pseudoknotens (PN') angeordnet ist.

11. Das paketvermittelte LAN nach Anspruch 10, wobei das besagte erste Netzwerkelement (NE3') weiterhin ein zweites Netzwerkschichtprotokoll (IP) unterstützt, wobei das besagte erste Netzwerkelement (NE3') weiterhin für die folgenden Aufgaben konfiguriert ist:
- Empfangen von zweiten Paketen (P_IP), welche gemäß dem besagten zweiten Netzwerkschicht-Protokoll (IP) formatiert sind;
- Ausführen eines Algorithmus zur Berechnung des zweiten kürzesten Pfades (SPF_IP), um einen zweiten kürzesten Pfad zu erhalten, wobei der besagte Algorithmus zur Berechnung des zweiten kürzesten Pfades nur den besagten Pseudoknoten (PN') und unter den besagten weiteren Netzwerkelementen (NE1', NE2', NE4', NE5') nur Netzwerkelemente (NE2', NE4'), welche das besagte zweite Netzwerkschichtprotokoll unterstützen, berücksichtigt und Netzwerkelemente (NE1', NE5'), welche dieses nicht unterstützen, ignoriert; und
- Routen der besagten zweiten Pakete (P_IP) an ein Netzwerkelement (NE4'), welches dem besagten zweiten kürzesten Pfad angehört und unmittelbar stromabwärts des besagten Pseudoknotens (PN') angeordnet ist.

12. Das paketvermittelte LAN nach einem beliebigen der Ansprüche 10 oder 11, wobei der besagte Pseudoknoten (PN') für die folgenden Aufgaben konfiguriert ist:
- Bereitstellen einer Pseudoknoten-Adjazenzliste (ALPN'), indem er das besagte erste Netzwerkelement (NE3') und alle weiteren Netzwerkelemente (NE1', NE2', NE4', NE5') des besagten paketvermittelten LANs (101) als mit dem besagten Pseudoknoten (PN')benachbart berücksichtigt, unabhängig von dem Netzwerkschichtprotokoll, welches diese unterstützen;
- Übertragen einer Adjazenznachricht (LSPPN') an das besagte erste Netzwerkelement (NE3') und an die besagten weiteren Netzwerkelemente (NE1', NE2', NE4', NE5'), wobei die besagte Adjazenznachricht (LSPPN') Informationen in Bezug auf die Pseudoknoten-Adjazenzliste (ALPN') enthält.

13. Das paketvermittelte LAN nach einem beliebigen der Ansprüche 10 bis 12, wobei das besagte erste Netzwerkelement (NE3') für die folgenden Aufgaben konfiguriert ist:
- Bereitstellen einer Netzwerkelement-Adjazenzliste (AL3'), indem es nur den besagten Pseudoknoten (PN') als mit dem besagten ersten Netzwerkelement (NE3') benachbart berücksichtigt; und
- Übertragen einer Netzwerkschichtprotokoll-Nachricht (LSP3) an den besagten Pseudoknoten (PN') und an die weiteren Netzwerkelemente (NE1', NE2', NE4', NE5'), wobei die besagte Netzwerkschichtprotokoll-Nachricht (LSP3) Informationen in Bezug auf das/die Netzwerkschichtprotokoll(e), welche(s) von dem besagten ersten Netzwerkelement (NE3') unterstützt wird/werden, enthält.

14. Das paketvermittelte LAN nach Anspruch 10, wobei der besagte Algorithmus zur Berechnung des ersten kürzesten Pfades (SPF_CLNP) die folgenden Operationen an dem besagten ersten Netzwerkelement (NE3') durchführt:
- Er bestimmt, ausgehend von den besagten Adjazenzinformationen (ALPN'), dass das besagte paketvermittelte LAN (101) die besagten weiteren Netzwerkelemente (NE1', NE2', NE4', NE5') umfasst;
- er bestimmt, ausgehend von den besagten Netzwerkschichtprotokoll-Informationen (PS1, PS2, PS4, PS5), welche der weiteren Netzwerkelemente (NE1', NE2', NE4', NE5') das erste Netzwerkschichtprotokoll unterstützen;
- er berechnet den ersten kürzesten Pfad von einem Quell-Netzwerkelement zu einem Ziel-Netzwerkelement, indem er den Pseudoknoten (PN') und nur diejenigen Netzwerkelemente (NE1', NE5'), welche das besagte erste Netzwerkschichtprotokoll unterstützen, berücksichtigt und demzufolge diejenigen Netzwerkelemente (NE2', NE4'), welche dieses nicht unterstützen, ignoriert;
- er ordnet einer Zieladresse (AdNE5') des besagten Ziel-Netzwerkelements auf der Basis des ersten kürzesten Pfades ein Netzwerkelement (NE5'), welches dem ersten kürzesten Pfad angehört und mit dem besagten Pseudoknoten (PN') benachbart ist, zu.

15. Das paketvermittelte LAN nach Anspruch 11, wobei der besagte Algorithmus zur Berechnung des zweiten kürzesten Pfades (SPF_IP) die folgenden Operationen an dem besagten ersten Netzwerkelement (NE3') durchführt:
- Er bestimmt, ausgehend von den besagten Adjazenzinformationen (ALPN'), dass das besagte paketvermittelte LAN (101) die besagten weiteren Netzwerkelemente (NE1', NE2', NE4', NE5') umfasst;
- er bestimmt, ausgehend von den besagten Netzwerkschichtprotokoll-Informationen (PS1, PS2, PS4, PS5), welche der weiteren Netzwerkelemente (NE1', NE2', NE4', NE5') das zweite Netzwerkschichtprotokoll unterstützen;
- er berechnet den zweiten kürzesten Pfad von einem Quell-Netzwerkelement zu einem Ziel-Netzwerkelement, indem er den Pseudoknoten (PN') und nur diejenigen Netzwerkelemente (NE2', NE4'), welche das besagte zweite Netzwerkschichtprotokoll unterstützen, berücksichtigt und demzufolge diejenigen Netzwerkelemente (NE1', NE5'), welche dieses nicht unterstützen, ignoriert;
- er ordnet einer Zieladresse (AdNE4') des besagten Ziel-Netzwerkelements auf der Basis des zweiten kürzesten Pfades ein Netzwerkelement (NE4'), welches dem zweiten kürzesten Pfad angehört und mit dem besagten Pseudoknoten (PN') benachbart ist, zu.

## Revendications

1. Procédé de routage de paquets de données dans un réseau local, LAN, (101) à commutation de paquets,
dans lequel ledit LAN à commutation de paquets (101) comprend un premier élément de réseau (NE3') et d'autres éléments de réseau (NE1', NE2', NE4', NE5'), ledit premier élément de réseau (NE3') prenant en charge un premier protocole de couche de réseau (CLNP),
dans lequel ledit procédé comprend une étape de modification virtuelle de la structure dudit réseau à commutation de paquets LAN (101) de manière à obtenir un réseau à topologie en étoile et de sélection d'un élément de réseau (NE2'), parmi ledit premier élément de réseau (NE3') et lesdits autres éléments de réseau (NE1', NE2', NE4', NE5'), pour qu'il fasse office de pseudo-noeud (PN'), c'est-à-dire d'élément de réseau virtuel qui est un centre de ladite étoile et qui est configuré pour considérer comme voisins ledit élément de réseau (NE3') et lesdits autres éléments de réseau (NE1', NE2', NE4', NE5') indépendamment du protocole de couche de réseau pris en charge par ledit premier élément de réseau (NE3') et lesdits autres éléments de réseau (NE1', NE2', NE4', NE5') ; et
dans lequel ledit procédé comprend, au niveau dudit premier élément de réseau (NE3') :
a) réception de premiers paquets (P_CLNP) mis en forme conformément audit premier protocole de couche de réseau (CLNP) ;
b) exécution d'un algorithme de premier chemin le plus court (SPF_CLNP) pour obtenir un premier chemin le plus court, ledit algorithme de premier chemin le plus court tenant uniquement compte dudit pseudo-noeud (PN') et, parmi lesdits autres éléments de réseau (NE1', NE2', NE4', NE5'), seulement des éléments de réseau (NE1', NE5') qui prennent en charge ledit premier protocole de couche de réseau (CLNP), tout en ignorant les éléments de réseau (NE2', NE4') qui ne le prennent pas en charge ; et
c) routage desdits premiers paquets reçus (P_CLNP) jusqu'à un élément de réseau (NE5') faisant partie dudit premier chemin le plus court et placé immédiatement en aval dudit pseudo-noeud (PN').

2. Procédé selon la revendication 1, dans lequel ledit premier élément de réseau (NE3') prend en outre en charge un deuxième protocole de couche de réseau (IP), ledit procédé comprenant en outre, au niveau dudit premier élément de réseau (NE3') :
- réception de deuxièmes paquets (P_IP) mis en forme conformément audit deuxième protocole de couche de réseau (IP) ;
- exécution d'un algorithme de deuxième chemin le plus court (SPF_IP) pour obtenir un deuxième chemin le plus court, ledit algorithme de deuxième chemin le plus court tenant uniquement compte dudit pseudo-nceud (PN') et, parmi lesdits autres éléments de réseau (NE1', NE2', NE4', NE5'), seulement des éléments de réseau (NE2', NE4') qui prennent en charge ledit deuxième protocole de couche de réseau (IP), tout en ignorant les éléments de réseau (NE1', NE5') qui ne le prennent pas en charge ; et
- routage desdits deuxièmes paquets reçus (P_IP) jusqu'à un élément de réseau (NE4') faisant partie dudit deuxième chemin le plus court et placé immédiatement en aval dudit pseudo-noeud (PN').

3. Procédé selon l'une quelconque des revendications 1 ou 2, dans lequel il comprend en outre, au niveau dudit pseudo-noeud (PN') :
- fourniture d'une liste de voisinage du pseudo-noeud (ALPN') en considérant voisins dudit pseudo-noeud (PN') à la fois ledit premier élément de réseau (NE3') et tous les autres éléments de réseau (NE1', NE2', NE4', NE5') dudit réseau à commutation de paquets LAN (101), indépendamment du protocole de couche de réseau qu'ils prennent en charge ;
- transmission d'un message de voisinage (LSPPN') audit premier élément de réseau (NE3') et auxdits autres éléments de réseau (NE1', NE2', NE4', NE5'), ledit message de voisinage (LSPPN') comprenant des informations en rapport avec la liste de voisinage du pseudo-noeud (ALPN').

4. Procédé selon l'une quelconque des revendications 1 à 3, dans lequel il comprend en outre, au niveau dudit premier élément de réseau (NE3') :
- fourniture d'une liste de voisinage d'élément de réseau (AL3') en considérant voisin dudit premier élément de réseau (NE3') uniquement le pseudo-noeud (PN') ; et
- transmission d'un message de protocole de couche de réseau (LSP3) audit pseudo-noeud (PN') et auxdits autres éléments de réseau (NE1', NE2', NE4', NE5'), ledit message de protocole de couche de réseau (LSP3) comprenant des informations en rapport avec le ou les protocoles de couche de réseau qui sont pris en charge par ledit premier élément de réseau (NE3').

5. Procédé selon la revendication 1, dans lequel ledit algorithme de premier chemin le plus court (SPF_CLNP) exécute les opérations suivantes au niveau dudit premier élément de réseau (NE3') :
- il détermine à partir desdites informations de voisinage (ALPN') que ledit réseau à commutation de paquets LAN (101) comprend lesdits autres éléments de réseau (NE1', NE2', NE4', NE5') ;
- il détermine à partir desdites informations de protocole de couche de réseau (PS1, PS2, PS4, PS5) lequel des autres éléments de réseau (NE1', NE2', NE4', NE5') prend en charge le premier protocole de couche de réseau (CLNP) ;
- il calcule le premier chemin le plus court d'un élément de réseau source à un élément de réseau destinataire en tenant compte du pseudo-noeud (PN') et seulement des éléments de réseau (NE1', NE5') qui prennent en charge ledit premier protocole de couche de réseau (CLNP), ignorant ainsi les éléments de réseau (NE2', NE4') qui ne le prennent pas en charge ;
- en se basant sur le premier chemin le plus court, il associe à une adresse destinataire (AdNE5') dudit élément de réseau destinataire un élément de réseau (NE5') qui appartient au premier chemin le plus court et qui est voisin dudit pseudo-noeud (PN').

6. Procédé selon la revendication 2, dans lequel ledit algorithme de deuxième chemin le plus court (SPF_IP) exécute les opérations suivantes au niveau dudit premier élément de réseau (NE3') :
- il détermine à partir desdites informations de voisinage (ALPN') que ledit réseau à commutation de paquets LAN (101) comprend lesdits autres éléments de réseau (NE1', NE2', NE4', NE5');
- il détermine à partir desdites informations de protocole de couche de réseau (PS1, PS2, PS4, PS5) lequel des autres éléments de réseau (NE1', NE2', NE4', NE5') prend en charge le deuxième protocole de couche de réseau (IP) ;
- il calcule le deuxième chemin le plus court d'un élément de réseau source à un élément de réseau destinataire en tenant compte du pseudo-noeud (PN') et seulement des éléments de réseau (NE2', NE4') qui prennent en charge ledit deuxième protocole de couche de réseau (IP), ignorant ainsi les éléments de réseau (NE1', NE5') qui ne le prennent pas en charge ;
- en se basant sur le deuxième chemin le plus court, il associe à une adresse destinataire (AdNE4') dudit élément de réseau destinataire un élément de réseau (NE4') qui appartient au deuxième chemin le plus court et qui est voisin dudit pseudo-noeud (PN').

7. Procédé selon la revendication 1, dans lequel lesdites informations (ALPN', PS1, PS2, PS4, PS5) sont comprises dans des messages du pseudo-noeud (PN') et des autres éléments de réseau (NE1', NE2', NE4', NE5').

8. Procédé selon la revendication 7, dans lequel lesdits messages sont des messages LSP, paquets d'état de liaison.

9. Procédé selon l'une quelconque des revendications 1 à 8, dans lequel ledit routage (RT_CLNP ; RT_IP) est réalisé par le biais d'au moins un tableau de routage (RT_CLNP ; RT_IP).

10. Réseau local à commutation de paquets, LAN, (101),
dans lequel ledit LAN à commutation de paquets (101) comprend un premier élément de réseau (NE3') et d'autres éléments de réseau (NE1', NE2', NE4', NE5'), ledit premier élément de réseau (NE3') prenant en charge un premier protocole de couche de réseau (CLNP ; IP),
dans lequel la structure dudit réseau à commutation de paquets LAN (101) est modifiée virtuellement de manière à obtenir un réseau à topologie en étoile et dans lequel un élément de réseau (NE2'), parmi ledit premier élément de réseau (NE3') et lesdits autres éléments de réseau (NE1', NE2', NE4', NE5'), est sélectionné pour qu'il fasse office de pseudo-noeud (PN'), c'est-à-dire d'élément de réseau virtuel qui est un centre de ladite topologie en étoile et qui est configuré pour considérer comme voisins ledit premier élément de réseau (NE3') et lesdits autres éléments de réseau (NE1', NE2', NE4', NE5') indépendamment du protocole de couche de réseau pris en charge par ledit premier élément de réseau (NE3') et lesdits autres éléments de réseau (NE1', NE2', NE4', NE5') ; et
dans lequel ledit premier élément de réseau (NE3') est configuré pour :
a) recevoir des premiers paquets (P_CLNP ; P_IP) mis en forme conformément audit premier protocole de couche de réseau (CLNP ; IP) ;
b) exécuter un algorithme de premier chemin le plus court (SPF_CLNP ; SPF_IP) pour obtenir un premier chemin le plus court, ledit algorithme de premier chemin le plus court tenant uniquement compte dudit pseudo-noeud (PN') et, parmi lesdits autres éléments de réseau (NE1', NE2', NE4', NE5'), seulement des éléments de réseau (NE1', NE5') qui prennent en charge ledit premier protocole de couche de réseau (CLNP ; IP), tout en ignorant les éléments de réseau (NE2', NE4') qui ne le prennent pas en charge ;
et
c) router lesdits premiers paquets reçus (P_CLNP ; P_IP) jusqu'à un élément de réseau (NE5') faisant partie dudit premier chemin le plus court et placé immédiatement en aval dudit pseudo-noeud (PN').

11. LAN à commutation de paquets selon la revendication 10, dans lequel ledit premier élément de réseau (NE3') prend en outre en charge un deuxième protocole de couche de réseau (IP), ledit premier élément de réseau (NE3') étant en outre configuré pour :
- recevoir des deuxièmes paquets (P_IP) mis en forme conformément audit deuxième protocole de couche de réseau (IP) ;
- exécuter un algorithme de deuxième chemin le plus court (SPF_IP) pour obtenir un deuxième chemin le plus court, ledit algorithme de deuxième chemin le plus court tenant uniquement compte dudit pseudo-noeud (PN') et, parmi lesdits autres éléments de réseau (NE1', NE2', NE4', NE5'), seulement des éléments de réseau (NE2', NE4') qui prennent en charge ledit deuxième protocole de couche de réseau tout en ignorant les éléments de réseau (NE1', NE5') qui ne le prennent pas en charge ; et
- router lesdits deuxièmes paquets reçus (P_IP) jusqu'à un élément de réseau (NE4') faisant partie dudit deuxième chemin le plus court et placé immédiatement en aval dudit pseudo-noeud (PN').

12. LAN à commutation de paquets selon l'une quelconque des revendications 10 ou 11, dans lequel ledit pseudo-noeud (PN') est configuré pour :
- fournir une liste de voisinage du pseudo-noeud (ALPN') en considérant voisins dudit pseudo-noeud (PN') à la fois ledit premier élément de réseau (NE3') et tous les autres éléments de réseau (NE1', NE2', NE4', NE5') dudit réseau à commutation de paquets LAN (101), indépendamment du protocole de couche de réseau qu'ils prennent en charge ;
- transmettre un message de voisinage (LSPPN') audit premier élément de réseau (NE3') et auxdits autres éléments de réseau (NE1', NE2', NE4', NE5'), ledit message de voisinage (LSPPN') comprenant des informations en rapport avec la liste de voisinage du pseudo-noeud (ALPN').

13. LAN à commutation de paquets selon l'une quelconque des revendications 10 à 12, dans lequel le premier élément de réseau (NE3') est configuré pour :
- fournir une liste de voisinage d'élément de réseau (AL3') en considérant voisin dudit premier élément de réseau (NE3') uniquement le pseudo-noeud (PN') ; et
- transmettre un message de protocole de couche de réseau (LSP3) audit pseudo-noeud (PN') et auxdits autres éléments de réseau (NE1', NE2', NE4', NE5'), ledit message de protocole de couche de réseau (LSP3) comprenant des informations en rapport avec le ou les protocoles de couche de réseau qui sont pris en charge par ledit premier élément de réseau (NE3').

14. LAN à commutation de paquets selon la revendication 10, dans lequel ledit algorithme de premier chemin le plus court (SPF_CLNP) exécute les opérations suivantes au niveau dudit premier élément de réseau (NE3') :
- il détermine à partir desdites informations de voisinage (ALPN') que ledit réseau à commutation de paquets LAN (101) comprend lesdits autres éléments de réseau (NE1', NE2', NE4', NE5') ;
- il détermine à partir desdites informations de protocole de couche de réseau (PS1, PS2, PS4, PS5) lequel des autres éléments de réseau (NE1', NE2', NE4', NE5') prend en charge le premier protocole de couche de réseau ;
- il calcule le premier chemin le plus court d'un élément de réseau source à un élément de réseau destinataire en tenant compte du pseudo-noeud (PN') et seulement des éléments de réseau (NE1', NE5') qui prennent en charge ledit premier protocole de couche de réseau, ignorant ainsi les éléments de réseau (NE2', NE4') qui ne le prennent pas en charge ;
- en se basant sur le premier chemin le plus court, il associe à une adresse destinataire (AdNE5') dudit élément de réseau destinataire un élément de réseau (NE5') qui appartient au premier chemin le plus court et qui est voisin dudit pseudo-noeud (PN').

15. LAN à commutation de paquets selon la revendication 11, dans lequel ledit algorithme de deuxième chemin le plus court (SPF_IP) exécute les opérations suivantes au niveau dudit premier élément de réseau (NE3') :
- il détermine à partir desdites informations de voisinage (ALPN') que ledit réseau à commutation de paquets LAN (101) comprend lesdits autres éléments de réseau (NE1', NE2', NE4', NE5');
- il détermine à partir desdites informations de protocole de couche de réseau (PS1, PS2, PS4, PS5) lequel des autres éléments de réseau (NE1', NE2', NE4', NE5') prend en charge le deuxième protocole de couche de réseau ;
- il calcule le deuxième chemin le plus court d'un élément de réseau source à un élément de réseau destinataire en tenant compte du pseudo-noeud (PN') et seulement des éléments de réseau (NE2', NE4') qui prennent en charge ledit deuxième protocole de couche de réseau, ignorant ainsi les éléments de réseau (NE1', NE5') qui ne le prennent pas en charge ;
- en se basant sur le deuxième chemin le plus court, il associe à une adresse destinataire (AdNE4') dudit élément de réseau destinataire un élément de réseau (NE4') qui appartient au deuxième chemin le plus court et qui est voisin dudit pseudo-noeud (PN').
